(19) Europäisches Patentamt / European Patent Office / Office européen des brevets

(11) **EP 1 951 534 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(21) Anmeldenummer: **06819458.8**

(22) Anmeldetag: **14.11.2006**

(51) Int Cl.:
*G01G 19/08* (2006.01)   *B60C 23/06* (2006.01)

(86) Internationale Anmeldenummer:
**PCT/EP2006/068438**

(87) Internationale Veröffentlichungsnummer:
**WO 2007/054583 (18.05.2007 Gazette 2007/20)**

(54) **VERFAHREN ZUR ERKENNUNG DER BELADUNG EINES KRAFTFAHRZEUGS**

METHOD FOR IDENTIFYING THE LOAD OF A MOTOR VEHICLE

PROCEDE POUR DETECTER LE CHARGEMENT D'UN VEHICULE AUTOMOBILE

(84) Benannte Vertragsstaaten:
**DE FR**

(30) Priorität: **14.11.2005 DE 102005054555
14.11.2006 DE 102006053827**

(43) Veröffentlichungstag der Anmeldung:
**06.08.2008 Patentblatt 2008/32**

(73) Patentinhaber:
• **Continental Teves AG & Co. oHG
60488 Frankfurt (DE)**
• **Continental Aktiengesellschaft
30165 Hannover (DE)**

(72) Erfinder:
• **IRTH, Markus
55252 Mainz-Kastel (DE)**
• **KÖBE, Andreas
64625 Bensheim (DE)**
• **SUSSMANN, Christian
61250 Usingen (DE)**
• **BLANK, Franko
29693 Hodenhang (DE)**
• **KOUKES, Vladimir
64297 Darmstadt (DE)**

(74) Vertreter: **Bonn, Roman Klemens et al
Continental Automotive GmbH
Patente und Lizenzen
Postfach 22 16 39
80506 München (DE)**

(56) Entgegenhaltungen:
**WO-A-03/016115    WO-A-2005/005173
US-A- 6 064 931**

EP 1 951 534 B1

**Beschreibung**

Die Erfindung betrifft ein Verfahren gemäß Oberbegriff von Anspruch 1 sowie ein Computerprogrammprodukt.

In modernen Kraftfahrzeugen werden vermehrt elektronische Systeme zur Verbesserung der Sicherheit des Fahrzeugs eingesetzt. Es werden beispielsweise im europäischen Raum kaum noch Fahrzeuge ohne ein Antiblockiersystem (ABS) vertrieben. Weitere bekannte Systeme wie z.B. elektronisches Stabilitätsprogramm (ESP), Traktionskontrolle (TCS), elektronische Bremskraftverteilung (EBV), aktives Fahrwerk (ABC: Active Body Control), aktiver Überrollschutz (ARP: Active Rollover Prevention), Leuchtweitenregulierung und Reifendrucküberwachung werden zumindest als optionale Fahrzeugausstattung bei einer Vielzahl von Fahrzeugen angeboten. Wie allgemein bekannt, erhöht die Beladung eines Fahrzeugs die Belastung der Reifen, die Fahrzeugmasse und die Fahrzeugträgheit. Sie hat also eine vielfältige Auswirkung auf das Fahrzeugverhalten, die Fahrzeughandhabung und die Sicherheit. Durch die Kenntnis der Beladung des Fahrzeugs können die genannten Systeme beispielsweise hinsichtlich ihrer Regelalgorithmen verbessert werden, wodurch die Sicherheit des Fahrzeugs weiter erhöht wird.

Es sind so genannte direkt messende Reifendrucküberwachungssysteme bekannt, wie z.B. in der Anmeldung DE 199 26 616 C2 beschrieben, welche mittels Drucksensoren in den einzelnen Reifen den jeweiligen Druck in dem zugehörigen Rad ermitteln. Es sind weiterhin so genannte indirekt messende Reifendrucküberwachungssysteme (DDS: Deflation Detection System) bekannt, wie z.B. aus der DE 100 58 140 A1, welche aus Hilfsgrößen, z.B. durch Vergleich der Abrollumfänge der einzelnen Räder, einen Druckverlust ermitteln können.

Aus der EP 0 578 826 B1 geht eine Reifendruckbestimmungsvorrichtung hervor, welche auf Basis von Reifenschwingungen einen Druckverlust in einem Reifen ermittelt.

In der WO 01/87647 A1 ist ein Verfahren und eine Vorrichtung zur Reifendrucküberwachung beschrieben, welche/s ein auf der Erfassung von Radradien basierendes Reifendrucküberwachungssystem und ein auf der Auswertung von Schwingungseigenschaften basierendes Reifendrucküberwachungssystem kombiniert.

Aus der WO2005/005173 ist ein Verfahren zur Erkennung der Beladung eines Kraftfahrzeuges gemäß dem Oberbegriff des Anspruchs 1 bekannt.

Bei den bekannten Reifendrucküberwachungssystemen bewirkt beispielsweise eine hohe Beladung des Fahrzeugs eine zusätzlich auf die Reifen wirkende Kraft (erhöhte Radaufstandskraft), welche zu einer Verformung und zu einer Veränderung des Abrollverhaltens der Reifen führt. Die hohe Kraftbelastung kann dieselben negativen Folgen (Reifenschäden, Veränderung des Fahrverhaltens, etc.) wie ein zu geringer Reifenluftdruck haben. Bei einem direkt messenden Reifendrucküberwachungssystem wird die Veränderung des Abrollverhaltens der Räder nicht bemerkt, da sich die hohe Beladung nicht auf den gemessenen Reifenluftdruck auswirkt. Infolgedessen kann es trotz eines vorhandenen direkt messenden Reifendrucküberwachungssystems bei zu hoher Beladung zu einem Reifenschaden während der Fahrt kommen.

Bei einem indirekt messenden Reifendrucküberwachungssystem kann es während des systembedingten Einlernvorgangs zu einem falschen Einlernen von Fahrzeugparametern (z.B. Abrollumfänge der Räder) kommen, wenn bei diesem Einlernvorgang das Fahrzeug beispielsweise einseitig beladen ist. Dieses falsche Einlernen kann nach erfolgtem Lernen und veränderter Beladung zu einer Fehlwarnung führen.

In beiden Fällen muss das Reifendrucküberwachungssystem die Beladung berücksichtigen, um dem Fahrer eine Fehlerursache (Luftdruck oder Beladung) mitteilen zu können. Ansonsten kann eine vom System aufgrund zu hoher Beladung erzeugte Warnung nach einer Luftdruckkontrolle an der Tankstelle vom Fahrer als falsch fehlinterpretiert werden.

Aufgabe der Erfindung ist es daher, ein Verfahren zur Erkennung des Beladungszustandes eines Kraftfahrzeugs bzw. einer Beladungsänderung in einem Kraftfahrzeug bereitzustellen, welches zur Verbesserung der Regelalgorithmen und/oder der Bewarnung bei elektronischen Systemen dient, wie beispielsweise Antiblockiersystem, elektronisches Stabilitätsprogramm, Traktionskontrolle, aktives Fahrwerk, aktiver Überrollschutz, elektronische Bremskraftverteilung oder Reifendrucküberwachung, oder welches zur Plausibilisierung anderer Beladungserkennungsmethoden verwendet werden kann.

Diese Aufgabe wird erfindungsgemäß durch das Verfahren nach Anspruch 1 gelöst.

Der Erfindung liegt der Gedanke zugrunde, dass das Drehverhalten der Räder eines Fahrzeugs durch verschiedene physikalische Effekte beeinflusst wird, welche zumindest teilweise unterschiedlich von einer Änderung der Radlast abhängen. Somit ist es möglich, durch geeignete Analyse des Drehverhaltens der Räder eine Beladung des Kraftfahrzeugs und/oder eine Änderung der Beladung des Fahrzeugs zu erkennen.

In dem erfindungsgemäßen Verfahrens wird die Beladung und/oder eine Beladungsänderung durch Verknüpfung von Informationen aus einer Abrollumfangsanalyse der Räder mit Information einer Frequenzanalyse des Eigenschwingverhaltens der Räder ermittelt. Dies ist deshalb vorteilhaft, da Abrollumfänge von Rädern durch eine Änderung der Radlast verändert werden, wohingegen ein Frequenzspektrum eines Rades zumindest bezüglich einiger charakteristischer Größen, z.B. der Eigenfrequenz, nicht durch eine Änderung der Radlast verändert wird.

Daher ist es bevorzugt, dass in der Frequenzanalyse für mindestens ein Rad eine Eigenfrequenz bestimmt wird, und diese Eigenfrequenz oder eine Änderung der Eigenfrequenz zur Erkennung der Beladung und/oder Beladungsänderung verwendet wird. Dabei ist es besonders bevorzugt, wenn für jedes Rad die Eigenfrequenz bestimmt wird.

Gemäß einer bevorzugten Weiterbildung der Erfindung wird in der Frequenzanalyse für mindestens ein Rad eine Maßgröße, welche eine Maß für die Ausprägung der Eigenfrequenz darstellt, bestimmt und diese Maßgröße(n) oder ein Verhältnis von Maßgrößen zur Erkennung der Beladung und/oder Beladungsänderung verwendet. Besonders bevorzugt wird die Größe der Änderung der Maßgröße(n) oder die Größe der Änderung des Verhältnisses von Maßgrößen ausgewertet. Ebenso ist es besonders vorteilhaft, wenn für jedes Rad eine solche Maßgröße bestimmt wird. Als Maßgröße wird besonders bevorzugt der Energiegehalt des Spektrums im Bereich der Eigenfrequenz verwendet. Hierzu wird ganz besonders bevorzugt die Amplitude des Frequenzspektrums bei der Eigenfrequenz oder der Energiegehalt des Frequenzspektrums in einem vorgegebenen Frequenzbereich herangezogen.

Ein Verhältnis von Maßgrößen zwischen Vorder- und Hinterrädern wird bevorzugt zur Erkennung der Beladung und/oder Beladungsänderung verwendet. Besonders bevorzugt wird das Verhältnis von Energiegehalt eines Vorderrad-Spektrums im Bereich der Eigenfrequenz zu Energiegehalt eines Hinterrad-Spektrums im Bereich der Eigenfrequenz verwendet. Ebenso ist es besonders bevorzugt, die Größe der Änderung des Verhältnisses auszuwerten.

Erfindungsgemäß ist eine Temperaturkompensation der Ergebnisse der Frequenzanalyse durchzuführen. Damit soll eine Beeinflussung der aus dem Frequenzspektrum gewonnenen Größen durch die Temperatur vermieden werden.

Bevorzugt wird das erfindungsgemäße Verfahren erst nach einem Aktivierungssignal durchgeführt. Besonders bevorzugt wird die Erkennung der Beladung und/oder Beladungsänderung erst nach einem Stillstand des Fahrzeuges initiiert.

Gemäß einer vorteilhaften Weiterbildung der Erfindung wird die Erkennung der Beladung und/oder Beladungsänderung zur Verbesserung der Bewarnungs- und/oder Regelalgorithmen bei mindestens einem elektronischen System, insbesondere bei einem Antiblockiersystem, einem elektronischen Stabilitätsprogramm, einem indirekten oder direkten Reifendrucküberwachungssystem, verwendet.

Bevorzugt werden zur Erkennung der Beladung und/oder Beladungsänderung zusätzlich Informationen eines direkt messenden Reifendrucküberwachungssystems ausgewertet. Hierdurch kann eine weitere Verbesserung der Beladungserkennung erreicht werden.

Bei der Verwendung des erfindungsgemäßen Verfahrens zur Verbesserung eines indirekten Reifendruckverlusterkennungssystems, welches auf einer Abrollumfangsanalyse basiert, wird bevorzugt bei Feststellung einer Beladungsänderung eine Druckverlust-Warnung unterdrückt. Besonders bevorzugt werden dann für die Abrollumfangsanalysegrößen Kompensationswerte einlernt und nach erfolgter Kompensation wird die Druckverlust-Warnung wieder frei geschaltet.

Ein Vorteil des erfindungsgemäßen Verfahrens ist, dass nur durch Auswertung der Raddrehzahlsignale der Räder, welche üblicherweise bereits im Rahmen eines Antiblockiersystems bestimmt werden und somit verfügbar sind, eine Erkennung einer Beladung und/oder einer Beladungsänderung durchgeführt wird. Hierdurch ist eine kostengünstige Realisierung des erfindungsgemäßen Verfahrens möglich. Die Information über den Beladungszustand kann dann einem oder mehreren elektronischen Systemen, z.B. einem indirekt oder direkt messenden Reifendrucküberwachungssystem, zur Verfügung gestellt werden. Somit bietet das Verfahren den Vorteil mit wenig Aufwand und Kosten verschiedene Systeme zu verbessern.

Die Erfindung betrifft auch ein Computerprogrammprodukt, welches einen Algorithmus nach dem vorstehend beschriebenen Verfahren definiert.

Weitere bevorzugte Ausführungsformen ergeben sich aus den Unteransprüchen und der nachfolgenden Beschreibung an Hand von Figuren.

Es zeigen

Fig. 1 ein Flussdiagramm des erfindungsgemäßen Verfahrens,

Fig. 2 schematisch einen Einfluss einer Beladungsänderung auf eine Abrollumfangsanalysegröße aus einer Abrollumfangsanalyse, und

Fig. 3 schematisch einen Einfluss einer Beladungsänderung auf Größen aus einer Frequenzanalyse.

Indirekte Reifendruckverlusterkennungssysteme nutzen zwei physikalische Effekte, um auf einen Reifendruckverlust zuschließen. Zum einen ist dies der Sachverhalt, dass ein Reifen, welcher einen Druckverlust erlitten hat, einen kleineren Umfang besitzt als wenn er keinen Druckverlust erlitten hätte. Folglich dreht sich ein Reifen mit verringertem Reifendruck schneller. Durch entsprechende Verhältnisbildung der Raddrehzahlen der vier Räder eines Fahrzeuges kann man bei Beobachtung eines schneller drehenden Rades auf einen Druckverlust schließen. Der zweite physikalische Effekt basiert auf der Änderung der Schwingungseigenschaften des Systems Reifen-Felge-Fahrwerk bei Druckverlust. Insbesondere die torsionale Eigenfrequenz im Bereich von etwa 40 Hz ist druckabhängig und kann durch Frequenzanalyse ausgewertet werden.

Eine Beladung oder eine Veränderung der Beladung führt zu einer Umverteilung der Radlasten. Dies kann zu einer Erhöhung der Radlast auf einem oder mehreren Rädern führen. Dies hat folgende Auswirkung auf eine Abrollumfangsanalyse bzw. auf eine Frequenzanalyse der Reifen:

- Abrollumfangsanalyse:

    Eine Abrollumfangsanalysegröße ΔU, insbesondere eine Abrollumfangsdifferenz, reagiert auf eine im Verhältnis erhöhte Radlast ähnlich wie bei einem Druckverlust an dem Reifen, an dem die Radlast im Verhältnis zu den anderen erhöht wurde.
    Eine Trennung zwischen Radlastveränderung und Druckverlust ist nicht möglich. Dies kann insbesondere beim Einlernen mit entladenem Fahrzeug und späterer Fahrt mit beladenem Fahrzeug zu einer erhöhten Fehlwarngefahr im Reifendrucküberwachungssystem führen.

- Frequenzanalyse:

    In der Frequenzanalyse führt eine erhöhte Beladung nicht zu einer Beeinflussung der Eigenfrequenz $f_{eigen}$, allerdings zu einer erhöhten Energie im Spektrum und zu einer ausgeprägteren Herausbildung der Eigenfrequenz $f_{eigen}$, z.B. zu einer größeren Amplitude A bei der Eigenfrequenz $f_{eigen}$. Eine Fahrt über eine Straße mit größerer Anregungsenergie (z.B. eine rauere Straßenoberfläche) kann ebenfalls zu diesem Effekt führen. Daher ist es bevorzugt, statt einer Betrachtung der absoluten Energie/Ausgeprägtheit der Eigenfrequenz(en) das Verhältnis der Energien/Ausgeprägtheit der Eigenfrequenz zwischen Vorderrädern und Hinterrädern zu betrachten.

Der Erfindung liegt also die Idee zugrunde, dass sich eine Beladungsänderung des Fahrzeuges auf die beiden oben beschriebenen physikalischen Effekte unterschiedlich auswirkt. Mit dem erfindungsgemäßen Verfahren wird eine Veränderung der Beladung nur anhand einer Analyse der Raddrehzahlsignale detektiert. Durch die kombinierte Auswertung der Daten, die durch eine Abrollumfangsanalyse und eine Frequenzanalyse der Reifen erhalten werden, ist es möglich, auf eine Beladungsveränderung zu schließen. Durch die Kombination der beiden Effekte kann eine Beladungsveränderung erkannt und ein Rückschluss auf die Radlastverteilung durchgeführt werden.

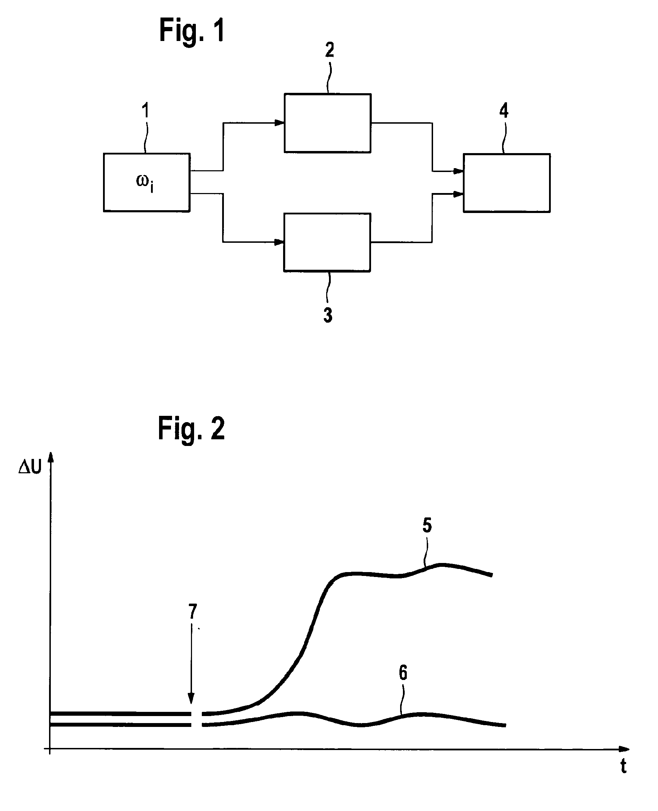

In Fig. 1 ist das erfindungsgemäße Verfahren schematisch in Form eines Flußdiagramms dargestellt. In Block 1 werden Größen $\omega_i$, welche mit den Raddrehzahlen der Räder zusammenhängen, z.B. durch die im Rahmen eines Antiblockiersystems vorhandenen Raddrehzahlsensoren, ermittelt. Danach werden die Größen $\omega_i$ verwendet, um eine Abrollumfangsanalyse (Block 2) und eine Frequenzanalyse (Block 3) einzelner oder aller Räder durchzuführen. Die Ergebnisse der beiden Analysen werden in Block 4 kombiniert und ausgewertet, um eine Beladungsänderung des Fahrzeuges zu erkennen.

Im Folgenden werden Ausführungsbeispiele des erfindungsgemäßen Verfahrens beschrieben. Dabei wird beispielhaft von einer Beladung der Hinterachse ausgegangen und erfindungsgemäße Verfahren an diesem Beispiel einer Hinterachsbeladung erläutert.

In Fig. 2 ist schematisch ein Verlauf zweier Abrollumfangsanalysegrößen ΔU aus einer Abrollumfangsanalyse über der Zeit t dargestellt. Kurve 5 gibt den Verlauf der Abrollumfangsanalysegröße ΔU für die Hinterachse und Kurve 6 den Verlauf der Abrollumfangsanalysegröße ΔU für die Vorderachse wieder. Zum Zeitpunkt 7 steht das Fahrzeug still und wird auf der Hinterachse beladen.

Durch die erhöhte Beladung auf der Hinterachse ändert sich der Umfang der Hinterräder, er wird geringer. Folglich ändert sich auch die Abrollumfangsanalysegröße ΔU für die Hinterachse relativ zu ihrem Wert vor der Beladungsänderung zum Zeitpunkt 7 (siehe Kurve 5).

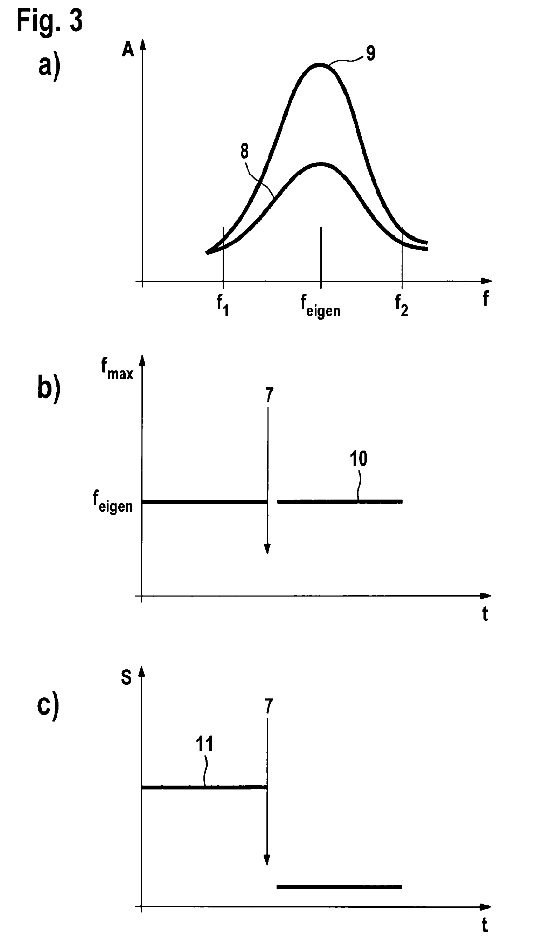

Fig. 3 zeigt schematisch die Auswirkungen einer Beladungsänderung auf charakteristische Größen einer Frequenzanalyse eines Hinterreifens. In Fig. 3a sind schematisch zwei Frequenzspektren einer Torsionsschwingung eines Hinterreifens dargestellt. Dazu ist die Amplitude A der Schwingung als Funktion der Frequenz f der Schwingung dargestellt. Kurve 8 gibt beispielhaft ein Frequenzspektrum vor der Änderung der Beladung wieder, Kurve 9 gibt ein Frequenzspektrum nach Beladungsänderung zum Zeitpunkt 7 wieder. Die Frequenzlage des Maximums des Frequenzspektrums $f_{max}$ bezeichnet man auch als Eigenfrequenz $f_{eigen}$. In Fig. 3b ist das Maximum des Frequenzspektrums $f_{max}$ über der Zeit t dargestellt. Kurve 10 gibt die Eigenfrequenz $f_{eigen}$ des Hinterreifens als Funktion der Zeit wieder, wobei zum Zeitpunkt 7 das Fahrzeug stillsteht und auf der Hinterachse beladen wird. In Fig. 3c ist schematisch eine Größe S, die das Verhältnis der Spektralenergien in den Eigenfrequenzspektren von Vorderrädern zu Hinterrädern wiedergibt, über der Zeit t dargestellt. Kurve 11 gibt den zeitlichen Verlauf der Größe S an, wobei zum Zeitpunkt 7 das Fahrzeug stillsteht und auf der Hinterachse beladen wird. Beispielsgemäß wird als Maß für die Spektralenergie die Spektralenergie im Bereich von $f_1$ bis $f_2$ um die Eigenfrequenz $f_{eigen}$ verwendet. Gemäß einem anderen Ausführungsbeispiel wird als Maß für die Spektralenergie die Amplitude bei der Eigenfrequenz $A(f_{eigen})$ verwendet.

Durch die Beladungsänderung wird die Eigenfrequenz $f_{eigen}$ nicht verändert. Sie ist vor und nach der Beladungsänderung zum Zeitpunkt 7 etwa gleich (siehe Kurve 10). Allerdings führt die Beladungsänderung zu einer stärkeren Ausprägung der Eigenfrequenz der Hinterräder (Vergleich von Kurve 8 und 9), d.h. die Amplitude A im Bereich $f_1$ bis $f_2$ um die Eigenfrequenz $f_{eigen}$ wächst nach der Beladung an. Dies entspricht einem Anwachsen der Spektralenergie im Bereich $f_1$ bis $f_2$ um die Eigenfrequenz $f_{eigen}$. Das Verhältnis S der Spektralenergien von Vorderrädern zu Hinterrädern wird damit geringer, wie Kurve 11 zeigt.

Wenn nach einem Stillstand (zeitlicher Bezug) durch eine Abrollumfangsanalysegröße ΔU ein Druckverlust auf der Hinterachse angezeigt wird (siehe Fig. 2) und eine Eigenfrequenzanalyse keine signifikante Verschiebung der Eigenfrequenz $f_{eigen}$ auf der Hinterachse zeigt (siehe Fig. 3b), dann wird auf eine mögliche Beladungsänderung erkannt.

In einem anderen Ausführungsbeispiel wird zusätzlich (optional) die Ausgeprägtheit der Frequenzspektren der Räder berücksichtigt. Hierzu wird eine Maßgröße, welche den Absolutwert der Energie oder die Ausgeprägtheit des Spektrums wiedergibt, für das Hinterrad oder die Hinterräder (z.B. gemittelt) im Vergleich zu einem vorher eingelernten Wert ausgewertet oder die Änderung eines Verhältnisses von Vorderachse zu Hinterachse einer solchen Maßgröße ausgewertet. In letzterem Fall kann die Größe straßenunabhängig gestaltet werden.

Als Maßgröße für die Spektralenergie eines Einzelspektrums wird beispielsgemäß entweder die Amplitude A des Spektrums bei der Eigenfrequenz $f_{eigen}$ oder der Energiegehalt E des Frequenzspektrums in einem geeigneten Bereich, z.B. das Integral über die Amplitudenwerte A(f) in einem Frequenzbereich von $f_1$ bis $f_2$ um die Eigenfrequenz $f_{eigen}$:

$$E = \int_{f1}^{f2} (A(f))^2 \, df,$$

verwendet.

Wenn nach einem Stillstand durch eine Abrollumfangsanalysegröße ΔU ein Druckverlust auf der Hinterachse angezeigt wird, eine Eigenfrequenzanalyse keine signifikante Verschiebung der Eigenfrequenz $f_{eigen}$ auf der Hinterachse zeigt und zusätzlich entweder der Absolutwert der Energie / die Ausgeprägtheit des Spektrums an den Hinterrädern im Vergleich zu einem vorher eingelernten Zustand gestiegen ist oder das Verhältnis dieser Größe von vorne zu hinten sich verändert hat, dann wird auf eine mögliche Beladungsänderung erkannt.

Für eine detaillierte Auswertung empfiehlt es sich weiterhin, Reifen- und fahrzeugspezifische Kalibrierwerte für die verschiedenen Lastszenarien zu bestimmen. Hierzu werden beispielsgemäß Kalibrierwerte für die Eigenfrequenzen, Amplitudenverhältnisse, Lerntemperaturen, und Abrollumfänge eingelernt und im Steuergerät abgelegt. Diese bilden die Referenzwerte, mit denen die weiteren Werte während der Fahrt verglichen werden.

Eine Anwendung findet die erfindungsgemäße Lasterkennung in

• Fahrzeug-Regelsystemen,
• indirekten Reifendruckverlusterkennungssystemen,
• direkten Reifendruckverlusterkennungssystemen.

In einem weiteren Ausführungsbeispiel wird in einem indirekten Reifendruckverlusterkennungssystem, welches auf Abrollumfangsanalyse und Frequenzanalyse basiert, bei Feststellung einer Beladungsänderung zunächst eine Druckverlust-Warnung unterdrückt, und dann veranlasst, dass das System insbesondere für die Werte aus der Abrollumfangsanalyse Kompensationswerte einlernt. Nach erfolgter Kompensation wird die Druckverlust-Warnung wieder frei geschaltet.

Darüber hinaus kann die erfindungsgemäße Methode der Lasterkennung für eine weitere Verbesserung oder Plausibilisierung anderer Beladungserkennungsmethoden verwendet werden.

Gemäß einem weiteren Ausführungsbeispiel wird das erfindungsgemäße Verfahren zur Erkennung der Beladung durch die Informationen aus einem direkt messenden Reifendrucküberwachungssystem ergänzt. So werden z.B. die Informationen aus einer Abrollumfangsanalyse und einer Frequenzanalyse der Räder sowie die Informationen aus einem direkten Druckmesssystem für eine Erkennung der Beladung / Beladungsänderung herangezogen.

**Patentansprüche**

1. Verfahren zur Erkennung der Beladung eines Kraftfahrzeugs, wobei eine Beladung des Fahrzeugs und/oder eine Änderung der Beladung des Fahrzeugs anhand einer Analyse des Drehverhaltens der Räder erkannt wird, wobei die Beladung und/oder Beladungsänderung aus einer Verknüpfung mindestens einer Information einer Abrollumfangsanalyse der Räder mit mindestens einer Information einer Frequenzanalyse des Eigenschwingverhaltens mindestens eines Rades ermittelt wird, **dadurch gekennzeichnet, dass** in der Frequenzanalyse eine Temperaturkompensation durchgeführt wird.

2. Verfahren nach Anspruch 1, **dadurch gekennzeichnet, dass** in der Frequenzanalyse für mindestens ein Rad, insbesondere für jedes Rad, eine Eigenfrequenz bestimmt wird, und diese zur Erkennung der Beladung und/oder Beladungsänderung verwendet wird.

3. Verfahren nach Anspruch 1 oder 2, **dadurch gekennzeichnet, dass** in der Frequenzanalyse für mindestens ein Rad, insbesondere für jedes Rad, eine Maßgröße, welche eine Maß für die Ausprägung der Eigenfrequenz darstellt, insbesondere der Energiegehalt des Spektrums im Bereich der Eigenfrequenz, bestimmt wird, und dass diese Maßgröße(n), insbesondere Verhältnisse von Maßgrößen, zur Erkennung der Beladung und/oder Beladungsänderung verwendet wird/werden.

4. Verfahren nach Anspruch 3, **dadurch gekennzeichnet, dass** ein Verhältnis von Maßgrößen zwischen Vorder- und Hinterrädern verwendet wird.

5. Verfahren nach mindestens einem der vorhergehenden Ansprüche, **dadurch gekennzeichnet, dass** dieses erst nach einem Aktivierungssignal, insbesondere einem Stillstand des Fahrzeuges, durchgeführt wird.

6. Verfahren nach mindestens einem der vorhergehenden Ansprüche, **dadurch gekennzeichnet, dass** die Erkennung der Beladung und/oder Beladungsänderung zur Verbesserung der Bewarnungsund/oder Regelalgorithmen bei mindestens einem elektronischen System, insbesondere bei einem Antiblockiersystem, einem elektronischen Stabilitätsprogramm, einem indirekten oder direkten Reifendrucküberwachungssystem, verwendet wird.

7. Verfahren nach mindestens einem der vorhergehenden Ansprüche, **dadurch gekennzeichnet, dass** zur Erkennung der Beladung und/oder Beladungsänderung zusätzlich Informationen eines direkt messenden Reifendrucküberwachungssystems ausgewertet werden.

8. Computerprogrammprodukt, **dadurch gekennzeichnet, dass** dieses einen Algorithmus definiert, welcher ein Verfahren gemäß mindestens einem der Ansprüche 1 bis 7 umfasst.

**Claims**

1. Method for recognizing the load on a motor vehicle, wherein a load on the motor vehicle and/or a change in the load on the motor vehicle is recognized from analysis of the rotation behaviour of the wheels, wherein the load and/or change in load is ascertained from a combination of at least one piece of information from a rolling circumference analysis on the wheels with at least one piece of information from a frequency analysis on the natural oscillation behaviour of at least one wheel, **characterized in that** temperature compensation is performed in the frequency analysis.

2. Method according to Claim 1, **characterized in that** in the frequency analysis for at least one wheel, particularly for each wheel, a natural frequency is determined, and this is used to recognize the load and/or change in load.

3. Method according to Claim 1 or 2, **characterized in that** in the frequency analysis for at least one wheel, particularly for each wheel, a dimension variable, which represents a dimension for the manifestation of the natural frequency, particularly the energy content of the spectrum in the region of the natural frequency, is determined, and **in that** this/these dimension variable(s), particularly ratios of dimension variables, is/are used to recognize the load and/or change in load.

4. Method according to Claim 3, **characterized in that** a ratio of dimension variables between front and rear wheels is used.

5. Method according to at least one of the preceding claims, **characterized in that** it is performed only after an activation signal, particularly after the vehicle is at a standstill.

6. Method according to at least one of the preceding claims, **characterized in that** the recognition of the load and/or change in load is used to improve the warning and/or control algorithms for at least one electronic system, particularly for an antilock brake system, an electronic stability control system, an indirect or direct tyre pressure monitoring system.

7. Method according to at least one of the preceding claims, **characterized in that** recognition of the load and/or change in load additionally involves evaluation of information from a directly measuring tyre pressure monitoring system.

8. Computer program product, **characterized in that** it defines an algorithm that comprises a method according to at least one of Claims 1 to 7.

**Revendications**

1. Procédé pour détecter le chargement d'un véhicule automobile, dans lequel un chargement du véhicule automobile et/ou une modification du chargement du véhicule automobile est/sont détecté(s) sur la base d'une analyse du comportement de rotation des roues, dans lequel le chargement et/ou la modification du chargement est/sont déterminé(s) à partir d'une combinaison d'au moins une information concernant une analyse de la circonférence de roulement des roues avec au moins une information concernant une analyse de fréquence de l'oscillation propre d'au moins une roue, **caractérisé en ce qu'**une compensation de température est effectuée lors de l'analyse de fréquence.

2. Procédé selon la revendication 1, **caractérisé en ce que**, lors de l'analyse de fréquence concernant au moins une roue, notamment concernant au moins chaque roue, une fréquence propre est déterminée et celle-ci est utilisée pour détecter le chargement et/ou la modification du chargement.

3. Procédé selon la revendication 1 ou 2, **caractérisé en ce que**, lors de l'analyse de fréquence concernant au moins une roue, notamment concernant chaque roue, une mesure qui représente une expression de la fréquence propre, notamment du contenu en énergie du spectre dans la région de la fréquence propre est déterminée, et **en ce que** ladite/lesdites mesure(s) est/sont notamment des rapports entre des mesures permettant de détecter le chargement et/ou la modification du chargement.

4. Procédé selon la revendication 3, **caractérisé en ce qu'**un rapport de mesures entre les roues avant et arrière est utilisé.

5. Procédé selon au moins l'une des revendications précédentes, **caractérisé en ce qu'**il n'est mis en oeuvre qu'après un signal d'activation, notamment un arrêt du véhicule automobile.

6. Procédé selon au moins l'une des revendications précédentes, **caractérisé en ce que** la détection du chargement et/ou la modification du chargement est utilisée pour améliorer l'algorithme d'alarme et/ou de commande dans le cas d'au moins un système électronique, notamment dans le cas d'un système antiblocage, d'un programme de stabilité électronique, et d'un système de surveillance indirecte ou directe de la pression des pneus.

7. Procédé selon au moins l'une des revendications précédentes, **caractérisé en ce que** des informations concernant un système de surveillance de la pression des pneus effectuant une mesure directe sont en outre évaluées pour détecter le chargement et/ou la modification du chargement.

8. Produit de programme informatique, **caractérisé en ce que** celui-ci définit un algorithme qui comprend un procédé selon au moins l'une des revendications 1 à 7.

## Fig. 1

## Fig. 2

# Fig. 3

### a)

### b)

### c)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19926616 C2
- DE 10058140 A1
- EP 0578826 B1
- WO 0187647 A1
- WO 2005005173 A